# EUROPÄISCHE PATENTSCHRIFT

(11) **EP 3 980 314 B1**
(45) Veröffentlichungstag und Bekanntmachung des Hinweises auf die Patenterteilung: **10.01.2024**
(21) Anmeldenummer: 20727209.7
(22) Anmeldetag: 15.05.2020
(51) Int. Cl.: B62D 6/00

(54) **EINSTELLEN EINES FAHRZEUGLENKWINKELS BEI EINEM FAHRZEUGLENKSYSTEM UNTER BERÜCKSICHTIGUNG VON DYNAMIKGRÖSSEN**
SETTING A VEHICLE STEERING ANGLE WITH A VEHICLE STEERING SYSTEM WHILE TAKING INTO CONSIDERATION DYNAMIC VARIABLES
RÉGLAGE D'UN ANGLE DE BRAQUAGE DE VÉHICULE POUR UN SYSTÈME DE DIRECTION DE VÉHICULE AVEC PRISE EN COMPTE DE GRANDEURS DYNAMIQUES

(30) Priorität: 05.06.2019 DE 102019208137
(43) Veröffentlichungstag der Anmeldung: 13.04.2022
(73) Patentinhaber: VOLKSWAGEN AKTIENGESELLSCHAFT, 38440 Wolfsburg (DE)
(72) Erfinder: HEINRICH, Felix, 38118 Braunschweig (DE)
(86) Internationale Anmeldenummer: PCT/EP2020/063693
(87) Internationale Veröffentlichungsnummer: WO 2020/244908

(56) Entgegenhaltungen:
- EP-A1- 3 444 167
- DE-A1-102006 036 744
- US-B2- 8 200 391

## Beschreibung

Die Erfindung richtet sich auf das Einstellen eines Fahrzeuglenkwinkels bei einem Fahrzeuglenksystem unter Berücksichtigung von Dynamikgrößen. Genauer gesagt betrifft die Erfindung ein Verfahren und eine Anordnung zum Einstellen eines Fahrzeuglenkwinkels bei einem Fahrzeuglenksystem. Das Fahrzeuglenksystem kann ein Steer-by-Wire-System sein. Entsprechend kann der Fahrzeuglenkwinkel, der auch als Radlenkwinkel bezeichnet werden kann, vollständig oder zumindest teilweise von einem Aktor des Fahrzeuglenksystems eingestellt werden.

Fahrzeuglenksysteme mit einem Aktor sind bekannt. Sie können nach Maßgabe von Fahrerlenkwünschen, wie sie zum Beispiel über eine Lenkhandhabe (Lenkrad) vorgegeben werden, Kräfte auf Fahrzeugräder oder hiermit gekoppelte mechanische Elemente (Zahnstange) aufbringen, um einen definierten Fahrzeuglenkwinkel einzustellen. Der Fahrerlenkwunsch kann zumindest teilweise ebenfalls entsprechende Kräfte ausüben (zum Beispiel durch eine mechanische Kopplung der Lenkhandhabe mit den Fahrzeugrädern). Es ist aber ebenso möglich, den Fahrerlenkwunsch und insbesondere die Lenkhandhabe vollständig mechanisch von den Fahrzeugrädern zu entkoppeln (steer-by-wire).

Zum Erfassen des Fahrerlenkwunsches kann die Lenkhandhabebetätigung und/oder ein vom Fahrer vorgegebener Lenkhandhabe- bzw. Lenkradwinkel sensorisch erfasst werden. Alternativ kann auch ein aufgebrachtes Lenkmoment erfasst werden. Üblicherweise wird bei bisherigen Lenksystemen einem erfassten Lenkradwinkel ein einzustellender Radlenkwinkel zugeordnet, wobei insbesondere bei steer-by-wire-Systemen zusätzlich oder alternativ eine Fahrzeuggeschwindigkeit berücksichtigt werden kann und eine Übersetzung des Lenkradwinkels in den Radlenkwinkel geschwindigkeitsabhängig eingestellt wird.

Die Übersetzung eines Lenkwunsches in einen Radlenkwinkel bzw. in die resultierende Fahrzeuglenkung stellt aus Sicht des Fahrzeugfahrers eine wesentliche Eigenschaft eines Fahrzeugs dar und wird von diesem direkt wahrgenommen.

Aus der US 8 200 391 B2 ist ein gattungsgemäßes Verfahren zum Einstellen eines Fahrzeuglenkwinkels bei einem Fahrzeuglenksystem bekannt, wobei die Soll-Dynamikgröße ein Giermoment ist.

Aus der EP 3 444 167 A1 ist ein Lenkwinkelregler bekannt, wobei der Lenkwinkelregler derart ausgebildet ist, einen Ist-Wert auf einen Soll-Wert zu regeln, wobei der Lenkwinkelregler als Ausgangssignal ein Stellsignal für eine Leistungselektronik ausgibt, um einen elektrischen Servo-Motor anzusteuern, wobei der Ist-Wert ein Lenkwinkel oder eine zu dem Lenkwinkel korrespondierende Messgröße ist und der Soll-Wert eine Lenkwinkelanforderung oder Messgrößenanforderung ist, wobei dem Lenkwinkelregler mindestens ein Speicher zugeordnet ist, in dem mindestens zwei verschiedene Regelalgorithmen abgelegt sind.

Aus der DE 10 2006 036 744 A1 ist ein Verfahren zur Regelung eines Lenksystems in einem Fahrzeug bekannt, wobei ein vom Fahrer vorgegebener Lenkradwinkel als Funktion von Fahrzeug-Zustandsgrößen in einem Radlenkwinkel an den gelenkten Rädern umgesetzt wird. Dabei wird in einem ersten Schritt der Lenkradwinkel unter Berücksichtigung mindestens einer Fahrzeug-Zustandsgröße in einen vorläufigen Soll-Radlenkwinkel umgesetzt, wobei in einem zweiten Schritt der vorläufige Soll-Radlenkwinkel in eine die Querdynamik des Fahrzeugs repräsentierende Soll-Zustandsgröße umgesetzt wird. Schließlich wird in einem dritten Schritt die Soll-Zustandsgröße mit einer entsprechenden Ist-Größe verglichen und aus der Soll-Ist-Abweichung in einer Regelung ein endgültiger Soll-Radlenkwinkel berechnet und im Lenksystem eingestellt.

Aufgabe der Erfindung ist es daher, ein Lenksystem für ein Fahrzeug dahingehend zu verbessern, dass aus Sicht des Fahrers ein angemessenes Fahrzeugverhalten in Reaktion auf Lenkwünsche vorliegt.

Diese Aufgabe wird durch ein Verfahren mit den Merkmalen von Anspruch 1 und eine Anordnung mit den Merkmalen von Anspruch 7 gelöst. Vorteilhafte Weiterbildungen sind in den abhängigen Ansprüchen angegeben. Es versteht sich, dass die einleitenden Bemerkungen und Merkmale ebenso bei der vorliegenden Erfindung vorgesehen sein bzw. auf diese zutreffen können, sofern nicht anders angegeben oder ersichtlich.

Eine erste Erkenntnis der Erfindung liegt darin, dass man durch nicht nur geschwindigkeitsabhängiges Übersetzen des Lenkwunsches in einen Radlenkwinkel ein aus Sicht des Fahrers gewünschtes Fahrzeugverhalten gezielt einstellen kann. Stattdessen wird erfindungsgemäß zusätzlich oder alternativ zu einer geschwindigkeitsabhängigen Übersetzung eine Dynamikgröße des Fahrzeugs berücksichtigt und insbesondere einer Soll-Dynamikgröße. Genauer gesagt wird ein Fahrerlenkwunsch in eine entsprechende Soll-Dynamikgröße übersetzt und dann, vorzugsweise per Regelung, versucht, diese Soll-Dynamikgröße tatsächlich auch zu erreichen. Stellgröße ist dabei vorzugsweise der Fahrzeuglenkwinkel.

Bei der Dynamikgröße handelt es sich um eine Gierrate und/oder eine Querbeschleunigung. Hierdurch wird ermöglicht, dass der Fahrer in Reaktion auf seine Lenkvorgaben entsprechende Dynamiken des Fahrzeugs direkter beeinflussen kann. Insbesondere kann hierdurch das Fahrzeug- bzw. Lenkverhalten gezielt mit Blick auf diese Dynamikgrößen eingestellt und/oder optimiert werden.

Weiter werden dem Fahrer erfindungsgemäß aber Auswahlmöglichkeiten zur Verfügung gestellt, sodass dieser eine Übersetzung von Lenkvorgaben in Dynamikgrößen wählen kann. Insbesondere kann hierdurch das Ausmaß und/oder der Umfang dieser Übersetzung gewählt werden, beispielsweise wie stark, mit welcher Gewichtung und/oder mit welcher Direktheit eine Lenkvorgabe in eine entsprechende Dynamikgröße übersetzbar ist. Bildlich gesprochen kann der Fahrer somit zwischen dem Fahrzeug- bzw. Lenkverhalten eines Sportwagens und dem einer Limousine durch Treffen einer entsprechenden Auswahl wählen.

Aus Sicht des Fahrers kann somit je persönlicher Präferenz oder auch je Sicherheitsbedürfnis ein angemessenes Lenkverhalten des Fahrzeugs wählbar sein.

Im Detail wird ein Verfahren zum Einstellen eines Fahrzeuglenkwinkels (zum Beispiel ein Radlenkwinkel) bei einem Fahrzeuglenksystem vorgeschlagen, wobei der Fahrzeuglenkwinkel zumindest anteilig mit einem Aktor (zum Beispiel einem Elektro-und/oder Servomotor) des Fahrzeuglenksystems einstellbar ist, mit:
- Bereitstellen einer Auswahlmöglichkeit, mittels derer ein Fahrzeugfahrer eine von wenigstens zwei Übersetzungseinstellungen auswählen kann, die jeweils eine Übersetzung (z.B. ein Übersetzungsfaktor oder -verhältnis) eines Fahrerlenkwunsches in eine Soll-Dynamikgröße definieren;
- Erhalten einer vom Fahrer ausgewählten Übersetzungseinstellung;
- Erhalten eines Fahrerlenkwunsches;
- Ermitteln einer Soll-Dynamikgröße des Fahrzeugs in Abhängigkeit des Fahrerlenkwunsches und der ausgewählten Übersetzungseinstellung;
- Einstellen (und/oder Ermitteln) eines erforderlichen Fahrzeuglenkwinkels, um die Soll-Dynamikgröße zu erreichen.

Dabei wird die Soll-Dynamikgröße modellbasiert ermittelt, wobei die Soll-Dynamikgröße eine Gierrate des Fahrzeugs und/oder eine Querbeschleunigung des Fahrzeugs ist.

Wie nachstehend erläutert, können zumindest die vorstehenden Ermittlungs-Verfahrensschritte von einem Lenkungssteuergerät ausgeführt werden.

Bei dem Fahrzeug kann es sich um ein insbesondere nicht schienengebundenes Kraftfahrzeug, wie zum Beispiel einen Personenkraftwagen oder einen Lastkraftwagen handeln. Prinzipiell ist es möglich, die Erfindung bei Fahrzeugen beliebiger Art einzusetzen (zum Beispiel bei Wasser- oder Luftfahrzeugen), die über Fahrzeuglenksystem verfügen.

Der Fahrzeuglenkwinkel kann ein resultierender Lenkwinkel sein, den das Fahrzeug tatsächlich einnimmt bzw. einschlägt. Der Fahrzeuglenkwinkel kann gleichbedeutend mit einem Radlenkwinkel sein, wie sie zum Beispiel bei Kraftfahrzeugen in bekannter Weise von Fahrzeuglenksystemen eingestellt werden.

Die Auswahlmöglichkeit kann über ein Fahrerinformationssystem und/oder Infotainmentsystem bereitgestellt werden. Insbesondere kann die Auswahlmöglichkeit mittels wenigstens einer Anzeigeeinrichtung anzeigbar sein. Dies kann insbesondere durch Anzeigen eines Konfigurationsmenüs erfolgen. Der Fahrer kann zum Beispiel durch Antippen oder andere berührungsempfindliche Aktivierungen eine Auswahl treffen. Prinzipiell ist es auch möglich, die Auswahlmöglichkeit derart bereitzustellen, dass per Spracheingabe, per Gestenerkennung oder durch Betätigen haptischer Schalter Auswahlen möglich sind.

Wurde eine entsprechende Auswahl getroffen, kann dies zum Beispiel über einen Fahrzeugbus von einer Auswahleinrichtung (zum Beispiel dem Fahrerinformationssystem oder einem Schalter) an das Lenkungssteuergerät übermittelt werden. Beispielsweise können nach Maßgabe der Auswahl entsprechende Signale erzeugt und ausgegeben werden, die dann von dem Lenkungssteuergerät erhalten und ausgewertet werden.

Der Fahrerlenkwunsch kann analog zur einleitend geschilderten Art durch sensorisches Erfassen einer Fahrer-Lenkvorgabe ermittelt werden bzw. dieser entsprechen. Beispielsweise kann ein Winkelsensor an einer Lenkhandhabe oder an einer hiermit verbundenen Welle angeordnet sein und als Fahrerlenkwunsch einen vorgegebenen Lenkradwinkel ermitteln. Zusätzlich oder alternativ kann in an sich bekannter Weise ein sogenanntes Fahrerhandmoment als Fahrerlenkwunsch ermittelt werden, wobei vorzugsweise wiederum auf entsprechende (Winkel-) Sensorsignale und insbesondere deren zeitliche Änderungen zurückgegriffen werden kann.

Dabei wird die Soll-Dynamikgröße rechnerisch ermittelt und insbesondere rein rechnerisch, wofür aber sensorisch gemessene anderweitige Signale, wie zum Beispiel eine Fahrzeuggeschwindigkeit, berücksichtigt werden können.

Hierzu werden virtuelle bzw. mathematische Fahrzeugmodelle verwendet. Ein Beispiel ist ein lineares Einspurmodell. Mit derartigen Modellen können in an sich bekannter Weise zum Beispiel die Gierrate und/oder die Querbeschleunigung anhand von Fahrzeugparametern berechnet werden.

Durch die modellbasierte Ermittlung kann eine vergleichsweise hohe Genauigkeit erreicht werden, ohne aber das gesonderte Sensoren zum direkten Messen der gewünschten Dynamikgrößen zwingend vorgesehen sein müssen.

Allgemein kann je nach ausgewählter Übersetzungseinstellung die Ermittlung der Soll-Dynamikgröße angepasst werden. Beispielsweise können dann Parameter des Fahrzeugmodells und/oder kann das verwendete Fahrzeugmodell an sich geändert werden. Insbesondere kann eine erste Übersetzungseinstellung mit einem ersten Fahrzeugmodell assoziiert sein und jede weitere Übersetzungseinstellung mit entsprechend einem weiteren Fahrzeugmodell. Derartige assoziierte Informationen können in der Speichereinrichtung eines hierin geschilderten Lenkungssteuergeräts hinterlegt und zum Beispiel von einem Fahrzeughersteller vorgegeben sein.

Vorteilhaft ist ein solches vorab-Hinterlegen von Informationen dahingehend, als dass diese im Fahrzeugbetrieb schnell abrufbar sind und erforderliche Rechenkapazitäten von zum Beispiel dem Lenkungssteuergerät geringer ausfallen können.

Das Ermitteln eines erforderlichen Fahrzeuglenkwinkels, um die Soll-Dynamikgröße zu erreichen, kann ebenfalls modellbasiert und/oder rechnerisch erfolgen. Beispielsweise kann hierfür in einem Regelalgorithmus ein entsprechender Zusammenhang hinterlegt sein (zum Beispiel als Beschreibung der Regelstrecke) und/oder kann allgemein eine

Übertragungsfunktion bzw. ein Übertragungszusammenhang zwischen dem Fahrzeuglenkwinkel und der Soll-Dynamikgröße hinterlegt sein.

Es versteht sich, dass der erforderliche Fahrzeuglenkwinkel einen Lenkwinkel beschreibt, mit dem die Soll-Dynamikgröße erwartungsgemäß erreicht werden kann. Ob dies tatsächlich der Fall ist, kann zum Beispiel im Rahmen einer erfindungsgemäß bevorzugt vorgesehenen Regelung überprüft und berücksichtigt werden. Hierfür kann eine Ist-Dynamikgröße ermittelt und rückgeführt werden. Die Ist-Dynamikgröße kann im Fahrzeug verfügbar sein und/oder von anderen Steuergerät des Fahrzeugs ermittelt und bereitgestellt werden. Beispielsweise kann ein ESP-Steuergerät die Ist-Dynamikgröße ermitteln, insbesondere durch Ermitteln und Vergleichen einzelner Raddrehgeschwindigkeiten. Das erfindungsgemäße Berücksichtigen der Ist-Dynamikgröße stellt somit vorteilhafterweise keine erhöhten Anforderungen an das Fahrzeug, da diese Größe bereits im Fahrzeug verfügbar sein kann.

Allgemein versteht es sich, dass die Ist-Dynamikgröße und die Soll-Dynamikgröße jeweils Werte derselben Dynamikgröße bezeichnen können. D. h., es könnte auch von Istwerten der Dynamikgröße und Sollwerten derselben Dynamikgröße gesprochen werden.

Eine Weiterbildung der Erfindung sieht vor, dass Steuersignale erzeugt werden, um den erforderlichen Fahrzeuglenkwinkel einzustellen. Die Steuersignale können zum Beispiel Stellsignale für den Aktor des Fahrzeuglenksystems sein. Insbesondere können sie Stellsignale für eine Leistungselektronik sein, nach deren Maßgabe dann der Aktor (bevorzugt ein Elektromotor) mit elektrischer Energie von der Leistungselektronik versorgt werden kann, um in an sich bekannter Weise (zum Beispiel durch Verlagern einer Zahnstange per Ritzel-Rotation) den Fahrzeuglenkwinkel einzustellen. Die entsprechenden Signale können wiederum von einem hierin geschilderten Lenkungssteuergerät erzeugt und/oder ausgegeben werden.

Gemäß einer weiteren Ausführungsform wird eine Ist-Dynamikgröße ermittelt und der erforderliche Fahrzeuglenkwinkel wird basierend auf einer Abweichung der Soll-Dynamikgröße und der Ist-Dynamikgröße ermittelt. Bei dieser Abweichung kann es sich insbesondere um eine Regelabweichung handeln, die durch Rückführen der Ist-Dynamikgröße erhalten werden kann. Anschließend kann diese Regelabweichung verwendet werden, um zum Beispiel vorstehend erwähnte Steuersignale und/oder Stellsignale für den Aktor zu erzeugen. Durch Vorsehen einer Regelung kann die Genauigkeit beim Einstellen des Fahrzeuglenkwinkels verbessert werden.

Wie erwähnt, kann erfindungsgemäß insbesondere eine Regelung vorgesehen sein bzw. durchgeführt werden. In diesem Fall kann die bereits erwähnte Ist-Dynamikgröße als Regelgröße und/oder der Fahrzeuglenkwinkel als eine Stellgröße verwendet werden.

Weiter kann erfindungsgemäß vorgesehen sein, dass zumindest eine erste und eine zweite Übersetzungseinstellung (als Auswahlmöglichkeit) existiert und derselbe Fahrerlenkwunsch bei der ersten Übersetzungseinstellung in einer höheren Soll-Dynamikgröße resultiert als bei der zweiten Übersetzungseinstellung. Anders ausgedrückt können sich die Übersetzungseinstellungen durch ein unterschiedliches Ausmaß und/oder eine unterschiedliche Stärke auszeichnen, mit der bei Vorliegen desselben Fahrerlenkwunsches die Soll-Dynamikgröße erzeugt werden. Hierdurch wird dann das Fahrzeugverhalten in der gewünschten Weise beeinflusst, nämlich ob umfassendere oder weniger umfassende Änderungen des Fahrzeuglenkwinkels vorgenommen werden, wenn derselbe Fahrerlenkwunsch vorliegt. Anders ausgedrückt kann hierdurch die Dynamik des Fahrzeuglenksystems eingestellt bzw. angepasst werden.

In diesem Zusammenhang kann ferner vorgesehen sein, dass die Soll-Dynamikgröße bei der ersten Übersetzungseinstellung zumindest 25% über der Soll-Dynamikgröße bei der zweiten Übersetzungseinstellung liegt. Dies gilt erneut für den Fall, dass von demselben Fahrerlenkwunsch ausgegangen wird.

Es kann aber auch vorgesehen sein, dass über das Spektrum sämtlicher möglicher Fahrerlenkwünsche (zum Beispiel über das mögliche Wertespektrum des Handlenkmoments) im Mittel und/oder als Minimum eine Abweichung von zumindest 10 % oder zumindest 25 % der mit der ersten und zweiten Übersetzungseinstellung jeweils erhaltenen Soll-Dynamikgröße für einen bestimmten Fahrerlenkwunsch erhalten wird.

Alternativ oder zusätzlich kann auch ein zeitlicher Versatz der Soll-Dynamikgröße bei Wahl der unterschiedlichen Übersetzungseinstellungen vorliegen. So kann z.B. dieselbe Soll-Dynamikgröße (bzw. derselbe Wert hiervon) z.B. bei der ersten Übersetzungseinstellung früher (d.h. bei einem geringeren Fahrerlenkwusch) als bei der zweiten Übersetzungseinstellung erhalten werden.

Insgesamt kann durch die vorstehend erläuterten Unterschiede der Übersetzungseinstellungen erreicht werden, dass aus Sicht des Fahrers spürbare Änderungen des Fahrzeugverhaltens bei Auswählen der entsprechenden Übersetzungseinstellungen auftreten.

Die Erfindung betrifft ferner eine Anordnung für ein Fahrzeug, mit:
einer Auswahleinrichtung, mittels derer ein Fahrzeugfahrer eine von wenigstens zwei Übersetzungseinstellungen auswählen kann, die jeweils eine Übersetzung eines Fahrerlenkwunsches in eine Soll-Dynamikgröße definieren;
einem Lenkungssteuergerät zum Ermitteln einer Stellgröße für das Einstellen eines Fahrzeuglenkwinkels,
wobei das Lenkungssteuergerät einen Fahrerlenkwunsch und die vom Fahrer ausgewählte Übersetzungseinstellung erhält und dazu eingerichtet ist:
   - eine Soll-Dynamikgröße des Fahrzeugs in Abhängigkeit des Fahrerlenkwunsches und der ausgewählten Übersetzungseinstellung zu ermitteln; und
   - einen zum Erreichen der Soll-Dynamikgröße erforderlichen Fahrzeuglenkwinkel zu ermitteln (und/oder einzustellen).

Dabei wird die Soll-Dynamikgröße modellbasiert ermittelt, wobei die Soll-Dynamikgröße eine Gierrate des Fahrzeugs und/oder eine Querbeschleunigung des Fahrzeugs ist.

Beispiele für Auswahleinrichtungen wurden vorstehend genannt. Insbesondere kann es sich hierbei um ein Fahrerinformationssystem und/oder einen haptischen Schalter handeln. Die Auswahleinrichtung und das Lenkungssteuergerät können über ein Fahrzeugkommunikationssystem (zum Beispiel einen Fahrzeugbus) miteinander verbunden sein. Die Auswahleinrichtung kann Informationen und/oder Signale bezüglich einer getroffenen Auswahl an das Lenkungssteuergerät übermitteln.

Prinzipiell kann die Anordnung auch das Fahrzeuglenksystem und/oder ein Fahrzeug jeglicher hierin erwähnter Art umfassen.

Das Lenkungssteuergerät kann elektronisch und/oder digital betreibbar sein. Es kann wenigstens eine Prozessoreinrichtung mit wenigstens einem Mikroprozessor umfassen. Allgemein kann das Lenkungssteuergerät dazu eingerichtet sein, zum Ausführen hierin geschilderter Schritte und/oder Maßnahmen Programmanweisungen auszuführen, dabei erhaltene Informationen zu verarbeiten und/oder Signale zu erzeugen und auszugeben.

Allgemein kann die Anordnung dazu eingerichtet sein, ein Verfahren gemäß jeglicher hierin erläuterten Art auszuführen. Insbesondere kann die Anordnung sämtliche weiteren Merkmale, Varianten und/oder Eigenschaften umfassen, um sämtliche hierin geschilderten Schritte, Funktionen oder Betriebszustände bereitzustellen. Ebenso können sämtliche Weiterbildungen und Erläuterungen zu den Verfahrensmerkmalen auf gleichlautende Anordnungsmerkmale ebenso zutreffen.

Die Erfindung wird im Folgenden anhand der beigefügten schematischen Figuren erläutert. Für gleichartige oder gleichwirkende Merkmale können dabei figurenübergreifend die gleichen Bezugszeichen verwendet werden.
- Fig. 1: zeigt eine erfindungsgemäße Anordnung gemäß einem Ausführungsbeispiel der Erfindung, die ein erfindungsgemäßes Verfahren ausführt;
- Fig. 2: zeigt ein Beispiel eines Regelkreises, wie ihn die Anordnung von Figur 1 implementiert; und
- Fig. 3: zeigt ein Ablaufschema eines erfindungsgemäßen Verfahrens.

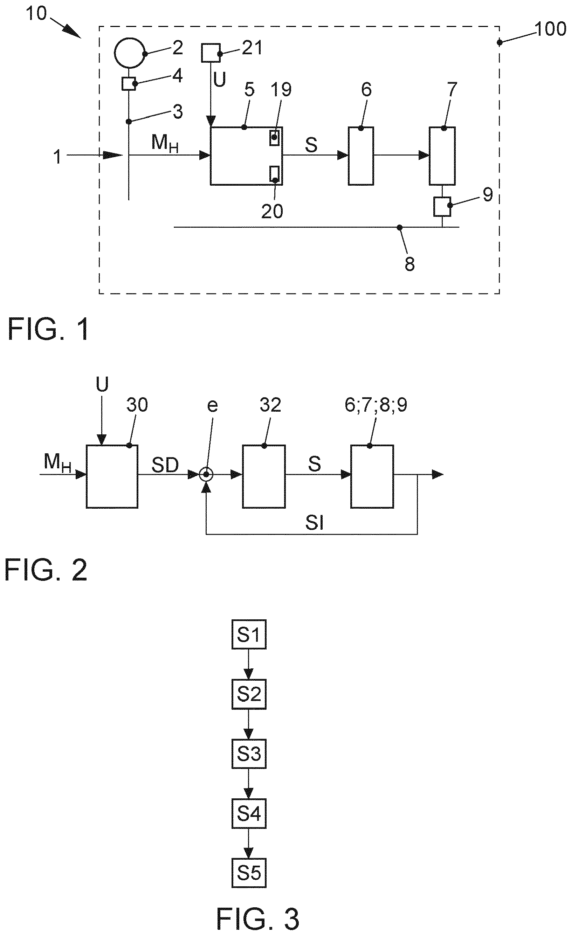

In Fig. 1 ist schematisch eine Anordnung 10 gemäß einem Ausführungsbeispiel der Erfindung gezeigt. Diese kommt in dem gezeigten Fall bei einem nicht vollständig dargestellten Kraftfahrzeug 100 zum Einsatz. Das Kraftfahrzeug 100 umfasst ein Fahrzeuglenksystem 1, das eine Lenkhandhabe 2 aufweist, die mit einer Eingangswelle 3 verbunden ist. An der Eingangswelle 3 ist ein Momentensensor 4 angeordnet, der einen Fahrlenkwunsch in Form eines Handmoments M_{H} an der Lenkhandhabe 2 erfasst. Bevorzugt ist der Sensor 4 jedoch ein Winkelsensor und der Fahrerlenkwunsch wird als vorgegebener bzw. vom Fahrer eingestellter Winkel erfasst.

Weiter weist das Fahrzeuglenksystem 1 ein Lenkungssteuergerät 5, eine Leistungselektronik 6, einen elektrischen Servo-Motor (Aktor) 7 und eine Zahnstange 8 auf. Der Servo-Motor 7 weist einen Rotorlagesensor 9 auf, aus dessen Signalen auf die Stellung der Zahnstange 8 und somit auf den Lenkwinkel geschlossen werden kann.

Dem Lenkungssteuergerät 5 wird der Fahrlenkwunsch M_{H} zugeführt. Nicht dargestellt ist, dass als weitere Größe z.B. der Lenkwusch eines Fahrerassistenzsystems oder gemessene Fahrdynamikgrößen des Fahrzeugs 100 zugeführt werden könnten.

Als eine weitere Eingangsgröße erhält das Lenkungssteuergerät 5 eine Übersetzungseinstellung U, die in der vorstehend geschilderten Weise eine Übersetzung eines Fahrerlenkwunsches M_{H} in eine Soll-Dynamikgröße definiert. Hierfür ist eine Auswahleinrichtung 21 gemäß einer der vorstehenden Varianten bereitgestellt, mittels derer der Fahrzeugfahrer eine aus wenigstens zwei verschiedenen Übersetzungseinstellungen U auswählen kann. Die ausgewählte Übersetzungseinstellung wird dann an das Lenkungssteuergerät 5 übermittelt (zum Beispiel per Fahrzeug-Kommunikationsbus).

In Abhängigkeit der Eingangsgrößen M_{H} und U erzeugt das Lenkungssteuergerät 5 eine Stellgröße S in Form eines Stellsignals für die Leistungselektronik 6, die dann entsprechend den Servo-Motor 7 bestromt, damit dieser per Servolenkmoment die Zahnstange 8 bewegt. Hierdurch wird der Fahrzeuglenkwinkel (Radlenkwinkel) eingestellt. Der Servo-Motor 7 kann über ein nicht dargestelltes Kugelkopfgetriebe mit der Zahnstange 8 verbunden sein. Der Rotorlagesensor 9 liefert einen Rotorwinkel ϕ, mittels dem aufgrund der bekannten Übersetzung die Position der Zahnstange 8 und somit auch der Fahrzeuglenkwinkel (Radlenkwinkel) ermittelbar ist. Weiter sei angemerkt, dass die Eingangswelle 3 im mechanischen Eingriff mit der Zahnstange 8 stehen kann, im Rahmen der Erfindung dies aber vorzugsweise nicht tut (steer-by-wire).

Zum Erzeugen der Stellgröße S des Lenkungssteuergeräts 5 kann der nachstehend erläuterte Regelkreis aus Fig. 2 verwendet werden, indem beispielsweise Dynamikgrößen ermittelt und/oder verglichen werden. Genauer gesagt zeigt Figur 2 einen in an sich bekannter Weise per Algorithmus implementierten Regelkreis, der von dem Lenkungssteuergerät 5 und insbesondere einer Prozessoreinrichtung 19 (siehe Figur 1) hiervon ausgeführt wird. Der Algorithmus bzw. dessen Programmanweisungen können auf einer Speichereinrichtung 20 des Lenkungssteuergeräts 5 (siehe ebenfalls Figur 1) hinterlegt sein.

In dem Regelkreis aus Fig. 2 wird zunächst der Fahrerlenkwunsch in Form des Handmoments M_{H} als Eingangsgröße erhalten. Anschließend wird mittels eines (mathematischen) Fahrzeugmodells 30 und unter Berücksichtigung der Übersetzungseinstellung U eine Soll-Dynamikgröße SD ermittelt (alternativ per Tabelle oder Kennlinie). Beispielhaft handelt es sich hierbei um die Gierrate, wobei aber auch die Querbeschleunigung betrachtet werden könnte.

Die Soll-Dynamikgröße SD wird dann verwendet, um über einen weiteren Funktionsblock 32 (zum Beispiel einen Regler-Block) denjenigen Fahrzeuglenkwinkel zu ermitteln, der zum Erzielen dieser Soll-Dynamikgröße (zum Beispiel der Gierrate) erforderlich ist. Anschließend kann anhand eines hinterlegten mathematischen und insbesondere funktionalen Zusammenhangs die Stellgröße S ermittelt werden, die erforderlich ist, um diesen Fahrzeuglenkwinkel einzustellen. Anders ausgedrückt wird die Stellgröße S ermittelt, mit der der Aktor 7 anzusteuern ist, damit der gewünschte Fahrzeuglenkwinkel eingestellt wird.

Gleichzeitig wird auch eine Ist-Dynamikgröße SI ermittelt. Diese kann zum Beispiel von einem ESP-Steuergerät erhalten werden, welche die einzelnen Raddrehgeschwindigkeiten ermittelt und/oder vergleicht. Die Ist-Dynamikgröße SI wird rückgeführt und per Differenzglied bzw. - knoten mit der Soll-Dynamikgröße SD verrechnet. Genauer gesagt wird auf Basis der Differenz der Ist- und Soll-Dynamikgröße SI, SD einer Regelabweichung e bestimmt, die dann der Ermittlung der Stellgröße S zugrunde gelegt wird.

In Fig. 2 ist vereinfacht dargestellt, dass die Stellgröße S auf die anhand von Figur 1 erläuterten Komponenten 6 bis 9 einwirkt und sich daraufhin die Ist-Dynamikgröße SI des Gesamtsystems bzw. des Fahrzeugs 100 einstellt. Letztere kann in der vorstehend geschilderten Weise ermittelt und der Regelung zugrunde gelegt werden.

In Fig. 3 ist schließlich ein Ablaufschema für ein erfindungsgemäßes Verfahren dargestellt, wie es mit der Anordnung 10 aus Fig. 1 und Fig. 2 ausführbar ist. In einem Schritt S1 wird der die Übersetzungseinstellung U ausgewählt und an das Lenkungssteuergerät 5 übermittelt. In einem Schritt S2 wird der Fahrerlenkwunsch M_{H} von dem Lenkungssteuergerät 5 erhalten. In einem Schritt S3 ermittelt das Lenkungssteuergerät 5 dann basierend auf diesen Eingangsgrößen U, M_{H} die Soll-Dynamikgröße SD bzw Soll-Gierrate. In einem Schritt S4 wird dann die Regelabweichung e basierend auf der ebenfalls erhaltenen Ist-Dynamikgröße SI bestimmt. In einem Schritt S5 erfolgt anschließend in der vorstehend geschilderten Weise die Bestimmung der Stellgröße S. Darauf basierend kann dann der erforderliche Fahrzeuglenkwinkel eingestellt werden, um die Soll-Dynamikgröße SD zu erreichen bzw. einzuregeln.

### Bezugszeichenliste

- 1: Fahrzeuglenksystem
- 2: Lenkhandhabe
- 3: Eingangswelle
- 4: Momentensensor
- 5: Lenkungssteuergerät
- 6: Leistungselektronik
- 7: Aktor (Elektromotor)
- 8: Zahnstange
- 9: Rotorlagensensor
- 10: Anordnung
- 19: Prozessoreinrichtung
- 20: Speichereinrichtung
- 21: Auswahleinrichtung
- 30: Fahrzeugmodell
- 32: Funktionsblock
- 100: Fahrzeug
- U: Übersetzungseinstellung
- S: Stellgröße
- M_{H}: Fahrerlenkwunsch (Handlenkmoment)
- e: Regelabweichung
- SD: Soll-Dynamikgröße
- SI: Ist-Dynamikgröße

## Patentansprüche

1. Verfahren zum Einstellen eines Fahrzeuglenkwinkels bei einem Fahrzeuglenksystem (1), wobei der Fahrzeuglenkwinkel zumindest anteilig mit einem Aktor (7) des Fahrzeuglenksystems (1) einstellbar ist, mit:
- Bereitstellen einer Auswahlmöglichkeit, mittels derer ein Fahrzeugfahrer eine von wenigstens zwei Übersetzungseinstellungen (U) auswählen kann, die jeweils eine Übersetzung eines Fahrerlenkwunsches (M_{H}) in eine Soll-Dynamikgröße (SD) definieren;
- Erhalten einer ausgewählten Übersetzungseinstellung (U);
- Erhalten eines Fahrerlenkwunsches (M_{H});
- Ermitteln einer Soll-Dynamikgröße (SD) des Fahrzeugs (100) in Abhängigkeit des Fahrerlenkwunsches (M_{H}) und der ausgewählten Übersetzungseinstellung (U);
- Einstellen eines erforderlichen Fahrzeuglenkwinkels, um die Soll-Dynamikgröße (SD) zu erreichen,
**dadurch gekennzeichnet, dass**
die Soll-Dynamikgröße (SD) modellbasiert ermittelt wird, wobei die Soll-Dynamikgröße (SD) eine Gierrate des Fahrzeugs (100) und/oder eine Querbeschleunigung des Fahrzeugs (100) ist.

2. Verfahren nach Anspruch 1, ferner **gekennzeichnet durch**:
- Erzeugen von Steuersignalen, um den erforderlichen Fahrzeuglenkwinkel einzustellen.

3. Verfahren nach einem der vorangehenden Ansprüche, ferner **gekennzeichnet durch**:
- Ermitteln einer Ist-Dynamikgröße (SI) und Ermitteln des erforderlichen Fahrzeuglenkwinkels basierend auf einer Abweichung der Soll-Dynamikgröße (SD) und der Ist-Dynamikgröße (SI).

4. Verfahren nach einem der vorangehenden Ansprüche, ferner **gekennzeichnet durch**:
- Verwenden einer Ist-Dynamikgröße (SI) als Regelgröße und/oder Verwenden des Fahrzeuglenkwinkels als eine Stellgröße (S).

5. Verfahren nach einem der vorangehenden Ansprüche, **dadurch gekennzeichnet, dass** zumindest eine erste und eine zweite Übersetzungseinstellung (U) vorgesehen ist und derselbe Fahrerlenkwunsch (M_{H}) bei der ersten Übersetzungseinstellung (U) in einer höheren Soll-Dynamikgröße (SD) resultiert als bei der zweiten Übersetzungseinstellung (U).

6. Verfahren nach Anspruch 5, **dadurch gekennzeichnet, dass** die Soll-Dynamikgröße (SD) bei der ersten Übersetzungseinstellung (U) zumindest 25% über der Soll-Dynamikgröße (SD) bei der zweiten Übersetzungseinstellung (U) liegt.

7. Anordnung (10) für ein Fahrzeug (100), mit:
einer Auswahleinrichtung (21), mittels derer ein Fahrzeugfahrer eine von wenigstens zwei Übersetzungseinstellungen (U) auswählen kann, die jeweils eine Übersetzung eines Fahrerlenkwunsches in eine Soll-Dynamikgröße (SD) definieren;
einem Lenkungssteuergerät (5) zum Ermitteln einer Stellgröße (S) für das Einstellen eines Fahrzeuglenkwinkels,
wobei das Lenkungssteuergerät (5) einen Fahrerlenkwunsch (M_{H}) und die ausgewählte Übersetzungseinstellung (U) erhält und dazu eingerichtet ist:
- eine Soll-Dynamikgröße (SD) des Fahrzeugs (100) in Abhängigkeit des Fahrerlenkwunsches (M_{H}) und der ausgewählten Übersetzungseinstellung (U) zu ermitteln; und
- einen zum Erreichen der Soll-Dynamikgröße (SD) erforderlichen Fahrzeuglenkwinkel zu ermitteln,
**dadurch gekennzeichnet, dass**
die Soll-Dynamikgröße (SD) modellbasiert ermittelt wird, wobei die Soll-Dynamikgröße (SD) eine Gierrate des Fahrzeugs (100) und/oder eine Querbeschleunigung des Fahrzeugs (100) ist.

## Claims

1. Method for setting a vehicle steering angle in a vehicle steering system (1), wherein the vehicle steering angle can be set, at least in part, by an actuator (7) of the vehicle steering system (1), comprising:
- providing a selection option by means of which a vehicle driver can select one of at least two translation settings (U), which each define a translation of a driver steering request (M_{H}) into a target dynamic variable (SD);
- receiving a selected translation setting (U);
- receiving a driver steering request (M_{H});
- determining a target dynamic variable (SD) of the vehicle (100) on the basis of the driver steering request (M_{H}) and the selected translation setting (U);
- setting a required vehicle steering angle in order to achieve the target dynamic variable (SD),
**characterized in that**
the target dynamic variable (SD) is determined on the basis of a model, wherein the target dynamic variable (SD) is a yaw rate of the vehicle (100) and/or a lateral acceleration of the vehicle (100).

2. Method according to claim 1, further **characterized by:**
- generating control signals in order to set the required vehicle steering angle.

3. Method according to any of the preceding claims, further
**characterized by:**
- determining an actual dynamic variable (SI) and determining the required vehicle steering angle based on a deviation of the target dynamic variable (SD) and the actual dynamic variable (SI).

4. Method according to any of the preceding claims, further
**characterized by:**
- using an actual dynamic variable (SI) as a controlled variable and/or using the vehicle steering angle as a manipulated variable (S).

5. Method according to any of the preceding claims, **characterized in that** at least a first and a second translation setting (U) is provided, and the same driver steering request (M_{H}) results in a higher target dynamic variable (SD) in the first translation setting (U) than in the second translation setting (U).

6. Method according to claim 5, **characterized in that** the target dynamic variable (SD) in the first translation setting (U) is at least 25% higher than the target dynamic variable (SD) in the second translation setting (U).

7. Arrangement (10) for a vehicle (100), comprising:
a selection device (21) by means of which a vehicle driver can select one of at least two translation settings (U), which each define a translation of a driver steering request into a target dynamic variable (SD);
a steering control unit (5) for determining a manipulated variable (S) for setting a vehicle steering angle,
wherein the steering control unit (5) receives a driver steering request (M_{H}) and the selected translation setting (U), and is designed:
- to determine a target dynamic variable (SD) of the vehicle (100) on the basis of the driver steering request (M_{H}) and the selected translation setting (U); and
- to determine a vehicle steering angle required to achieve the target dynamic variable (SD),
**characterized in that**
the target dynamic variable (SD) is determined on the basis of a model, wherein the target dynamic variable (SD) is a yaw rate of the vehicle (100) and/or a lateral acceleration of the vehicle (100).

## Revendications

1. Procédé permettant le réglage d'un angle de direction de véhicule dans un système de direction de véhicule (1), dans lequel l'angle de direction de véhicule est réglable au moins en partie avec un actionneur (7) du système de direction de véhicule (1), comportant :
- la fourniture d'une possibilité de sélection au moyen de laquelle un conducteur du véhicule peut sélectionner un réglage de transmission parmi au moins deux réglages de transmission (U) qui définissent respectivement une transmission d'une demande de direction du conducteur (M_{H}) en une grandeur de dynamique cible (SD) ;
- la réception d'un réglage de transmission (U) sélectionné ;
- la réception d'une demande de direction du conducteur (M_{H}) ;
- la détermination d'une grandeur de dynamique cible (SD) du véhicule (100) en fonction de la demande de direction du conducteur (M_{H}) et du réglage de transmission (U) sélectionné ;
- le réglage d'un angle de direction de véhicule nécessaire pour atteindre la grandeur de dynamique cible (SD),
**caractérisé en ce que**
la grandeur de dynamique cible (SD) est déterminée sur la base d'un modèle, dans lequel la grandeur de dynamique cible (SD) est un taux de lacet du véhicule (100) et/ou une accélération transversale du véhicule (100).

2. Procédé selon la revendication 1, en outre **caractérisé par** :
- la génération de signaux de commande pour régler l'angle de direction de véhicule nécessaire.

3. Procédé selon l'une des revendications précédentes, en outre **caractérisé par** :
- la détermination d'une grandeur de dynamique réelle (SI) et la détermination de l'angle de direction de véhicule nécessaire sur la base d'un écart entre la grandeur de dynamique cible (SD) et la grandeur de dynamique réelle (SI).

4. Procédé selon l'une des revendications précédentes, en outre **caractérisé par** :
- l'utilisation d'une grandeur de dynamique réelle (SI) comme grandeur de régulation et/ou l'utilisation de l'angle de direction de véhicule comme grandeur de réglage (S).

5. Procédé selon l'une des revendications précédentes,
**caractérisé en ce qu'**au moins un premier et un second réglage de transmission (U) sont prévus et la même demande de direction du conducteur (M_{H}) résulte en une grandeur de dynamique cible (SD) plus élevée pour le premier réglage de transmission (U) que pour le second réglage de transmission (U).

6. Procédé selon la revendication 5, **caractérisé en ce que** la grandeur de dynamique cible (SD) pour le premier réglage de transmission (U) est supérieure d'au moins 25 % à la grandeur de dynamique cible (SD) pour le second réglage de transmission (U).

7. Agencement (10) pour un véhicule (100), comportant :
un dispositif de sélection (21), au moyen duquel un conducteur du véhicule peut sélectionner un réglage de transmission parmi au moins deux réglages de transmission (U) qui définissent respectivement une transmission d'une demande de direction du conducteur en une grandeur de dynamique cible (SD) ;
un appareil de commande de direction (5) permettant de déterminer une grandeur de réglage (S) pour le réglage d'un angle de direction de véhicule,
dans lequel l'appareil de commande de direction (5) reçoit une demande de direction du conducteur (M_{H}) et le réglage de transmission (U) sélectionné et est configuré pour :
- déterminer une grandeur de dynamique cible (SD) du véhicule (100) en fonction de la demande de direction du conducteur (M_{H}) et du réglage de transmission (U) sélectionné ; et
- déterminer un angle de direction de véhicule nécessaire pour l'atteinte de la grandeur de dynamique cible (SD),
**caractérisé en ce que**
la grandeur de dynamique cible (SD) est déterminée sur la base d'un modèle, dans lequel la grandeur de dynamique cible (SD) est un taux de lacet du véhicule (100) et/ou une accélération transversale du véhicule (100).
